# EUROPEAN PATENT SPECIFICATION

(11) **EP 2 735 576 B1**
(45) Date of publication and mention of the grant of the patent: **08.04.2020**
(21) Application number: 12811541.7
(22) Date of filing: 13.04.2012
(51) Int. Cl.: C08F 255/02, C08F 2/00

(54) **SUPERCRITICAL CARBON DIOXIDE-ASSISTED SOLID-PHASE GRAFTING MODIFICATION METHOD FOR POLYPROPYLENE**
VERÄNDERUNGSVERFAHREN FÜR EINE SUPERKRITISCHE KOHLENDIOXID-FESTPHASEN-PFROPFUNG FÜR POLYPROPYLEN
PROCÉDÉ DE MODIFICATION PAR GREFFAGE EN PHASE SOLIDE ASSISTÉ PAR DU DIOXYDE DE CARBONE SUPERCRITIQUE POUR DU POLYPROPYLÈNE

(30) Priority: 08.07.2011 CN 201110191646
(43) Date of publication of application: 28.05.2014
(73) Proprietor: Petrochina Company Limited, Beijing 100007 (CN)
(72) Inventor: WANG, Wenyan, Beijing 100007 (CN); ZHANG, Mingqiang, Beijing 100007 (CN); WANG, Jian, Beijing 100007 (CN); WANG, Dengfei, Beijing 100007 (CN); ZOU, Enguang, Beijing 100007 (CN); QIU, Liping, Beijing 100007 (CN); DONG, Qun, Beijing 100007 (CN); JIANG, Jinxian, Beijing 100007 (CN); MA, Jianying, Beijing 100007 (CN); GE, Tengjie, Beijing 100007 (CN); AN, Yanjie, Beijing 100007 (CN); ZHANG, Deying, Beijing 100007 (CN); LI, Bo, Beijing 100007 (CN); GUO, Guiyue, Beijing 100007 (CN); WANG, Shihua, Beijing 100007 (CN); REN, He, Beijing 100007 (CN); JING, Lirong, Beijing 100007 (CN); GUO, Haifeng, Beijing 100007 (CN)
(74) Representative: Grünecker Patent- und Rechtsanwälte PartG mbB
(86) International application number: PCT/CN2012/000505
(87) International publication number: WO 2013/007095

(56) References cited:
- WO-A1-03/050153
- WO-A1-2009/065774
- CN-A- 1 486 998
- CN-A- 1 605 596
- CN-A- 101 386 668
- JP-A- 2004 137 429
- US-A- 5 663 237
- WANG, JIAN ET AL.: 'Solid-Phase Grafting of Butyl Acrylate onto Polypropylene with the Aid of Supercritical Carbon Dioxide' PETROCHEMICAL TECHNOLOGY vol. 38, no. 2, December 2009, pages 180 - 183, XP008172762
- WANG, JIAN ET AL.: 'Solid-phase grafting of multi-monomer onto PP' CHINA SYNTHETIC RESIN AND PLASTICS vol. 27, no. 2, December 2010, pages 5 - 7, XP008172761
- WANG, JIAN ET AL.: 'Grafting of Polypropylene with Ternary Monomer Assisted by Supercritical CO2' ACTA CHIMICA SINICA vol. 67, no. 10, December 2009, pages 1142 - 1144, XP008172760
- DONG, ZEXUAN ET AL.: 'Modification of isotactic polypropylene film by grafting of acrylic acid using supercritical CO2 as a swelling agent' JOURNAL OF MATERIALS CHEMISTRY September 2002, pages 3566 - 3568, XP055142387

## Description

### Field

The present application relates to a solid-phase grafting modification method for polypropylene by vinyl monomer assisted with supercritical carbon dioxide as swelling agent and entrainer.

### Background

Polypropylene (PP) has become one of the most promising thermoplastic macromolecule materials for its features of high strength, good heat-resistance, low density, easy to processing and low price. However, PP has a non-polar structure and properties of hydrophilic, dyeing, antistatic, adhesion and poor printability,and it is difficult for the PP to blend and complex with polar polymers and inorganic fillers, thus it cannot be applied in many fields. The effective method to overcome these defects is introducing polar group into the frame of PP, in which the method of using monomer containing polar group for grafting modification of PP is the simplest way to carry out, and attracts wide attention.

The typical methods for modifying PP comprise supercritical CO₂-assisted solid-phase grafting, normal solid-phase grafting, solution grafting, melt grafting and radiation grafting and etc. Among these methods, supercritical CO₂-assisted solid-phase grafting is favored for its unique advantages. That is because the backbone structure of PP will not be obviously changed and will retain the good original physical and chemical properties after the treatment of supercritical CO₂. Secondly, supercritical CO₂-assisted solid-phase grafting method for modification of polypropylene has overcome some defects existing in the conventional technology, for example, the large amount use of organic solution and its removal from product in the method of solution grafting, severe chain rupture of polypropylene in the method of melt grafting, limited to surface grafting, uneven grafting, low grafting rate and hard to control in the method of solid-phase grafting, and so on. Furthermore, the use of supercritical CO₂-assisted solid-phase modifying polypropylene also has the following advantages: (1) as the solvent strength of the supercritical CO₂ varies as a function of its temperature and pressure, the swelling level of the polypropylene and the distribution of penetrating agent between matrix polymer and solvent can be carried out both by adjusting the temperature and pressure; (2) the plasticization of the supercritical CO₂ can greatly increase diffusion velocity of monomer and initiator in the swollen polypropylene, and can also increase the level of adsorb dissolution of the monomer and initiator in the polymer; (3) CO₂ is gas at normal temperature and pressure, which makes it possible for solvent to rapidly emit from the polypropylene by reducing pressure, and no residual left in the polypropylene; (4) the surface tension of supercritical CO₂ solution is small, thus the wettability of polypropylene matrix does not affect the swelling level for polypropylene by CO₂ and the diffusional adsorption of small molecule monomer in the polypropylene matrix; (5) supercritical CO₂ is one of widely used environment-friendly reaction mediums, which does not change the properties of monomer and initiator.

In all of the patents of PP grafting modification carried out with supercritical carbon dioxide, swelling and grafting reactions are achieved in succession. For example, US5663237 discloses a reaction process by simultaneously introducing the raw materials, monomer and initiator into a high pressure autoclave, and then injecting CO₂ into the high pressure autoclave which is then heated to a supercritical state followed by grafting, in which the reaction pressure ranges from 7-20 MPa, and the reaction temperature ranges from 50-90°C. Due to the successive operation, the grafting reaction pressure is high and energy consumption is increased. And CN101143946 discloses a process for preparation of maleinized polypropylene by extrusion of supercritical reaction, and the polypropylene degrades severely due to the high reaction temperature.

### Summary

The objects of the present invention is to provide swelling assisted solid-phase grafting modification method for polypropylene by using supercritical carbon dioxide as swelling agent and entrainer. Said method uses 2-step method in which swelling and grafting are carried out respectively, so as to overcome the severe defects in the prior art comprising high reaction pressure, solvent recovery, environment pollution, low grafting rate, uneven grafting and the severe degradation of graft product.

The supercritical carbon dioxide-assisted solid-phase grafting modification method for polypropylene according to the invention, comprising
swelling polypropylene for 0.5 to 10 hours in supercritical carbon dioxide having dissolved vinyl monomer and initiator, then slowly relieving the pressure, moving the polypropylene that has undergone the swelling process into a reaction kettle, and adding xylene as an interface agent, the mass of xylene being 1% of the polypropylene, increasing the temperature to between 65°C and 165°C under normal pressure, and reacting 0.5 to 10 hours to obtain objective product.

The term "supercritical carbon dioxide" refers to the carbon dioxide under pressure above 7.38 MPa and temperature above 31.1°C.

The grafting monomer herein means vinyl unsaturated organic acid or ester and the mixture thereof, for example, acrylic acid (AA), butyl acrylate (BA), maleic anhydride (MAH), butyl methacrylate (BMA), methyl methacrylate (MMA), methylacrylic acid (MAA), styrene (St), ethyl acrylate (EA), pentaerythritol triacrylate (PETA) and etc, and the amount of the grafting monomer is 0.2-20% by mass, preferably 2-10% by mass with respect to polypropylene.

The initiator, for example normal azo compound or peroxide compound as initiator, may be azobisisobutyronitrile, benzoyl peroxide, cumyl peroxide, the amount thereof is 0.1-5.0% by mass, preferably 0.2-1.0% by mass with respect to the mass of the polypropylene.

During the swelling process, the swelling permeation temperature ranges from 31-60°C, the swelling pressure ranges from 7.5-12 MPa, and the swelling period ranges from 0.5-10 hours. Preferably, the swelling permeation temperature ranges from 32-47 °C, the swelling pressure ranges from 7.6-9.6 MPa, and the swelling period ranges from 1-6 hours.

The grafting reaction temperature preferably ranges from 70-110°C, and the reaction period preferably ranges from 1-3 hours.

### Drawings

Figure 1 is an infrared spectra of the sample of Example 1.
Figure 2 is a thermogravimetry curve of Example 1.
Figure 3a is an electron microscopy of Example 1.
Figure 3b is an electron microscopy of Example 1.

### Detailed Description

The method for analysis and measurement is as follows:
1. Infrared analysis: the graft product is characterized using Perkin-Elmer 1760-X infrared spectrometer, the specimen is firstly hot-pressed on a plate vulcanization machine to make a thin film with thickness of 50-100µm, in which the scan range is 4000-400cm⁻¹, the resolution is 4 cm⁻¹.
2. The measurement of wetting angle: the preparation of sample is the same as in the infrared analysis. A drop of distilled water is dropped on the sample stage so that the sample film is adhered to the sample stage closely. 2 µL deionized water is taken by a trace sampler and then is added onto the sample film, the angle is measured after 10 seconds.
3. Thermogravimetric analysis: PP-g-BA with different grafting rate and pure PP particles are tested for the thermogravimetric feature of the samples by using a Perkin-Elmer RIS Diamond model TG-DTA analyzer in N₂ atmosphere.
4. The measurement method of mechanical properties and melt flow rate (MFR): MFR test is carried out according to GB/T 3682-2000 standard, the test temperature is 230°C, and the load is 2.160 kg. The tensile test is carried out according to GB/T 1040-92 standard, the tensile rate is 50 mm/min, the test sample is injection molded into dumb bell shape, and the sample size of test interval is 50 mm×10 mm × 4 mm.

### Example 1

### Preparation of PP-g-BA

The polypropylene, butyl acrylate (BA) and initiator azobisisobutyronitrile (AIBN) are placed in a high pressure autoclave according to mass ratios of 100/4/0.3 and 100/6/0.3 respectively, and then placed in a thermostatic waterbath with a preset temperature. The high pressure autoclave was filled firstly with carbon dioxide with low pressure to displace the air thoroughly in the high pressure autoclave, and then is injected with the carbon dioxide to a specified pressure using a high pressure pump. The swelling temperature is controlled to 41 °C, and the swelling pressure is 8.1 MPa. After swelling for 4 hours, the high pressure autoclave is taken out and cooled with cold water, and the pressure is relieved slowly. The swollen polypropylene is moved into a reaction kettle, adding xylene as an interface agent with a ratio of 1% by mass with respect to polypropylene, and then injecting nitrogen. Then the reaction kettle is cooled after reacting for 2 hours at 80°C. Sample No.2 and No.3 are taken out, purified and dried, calculating the grafting rate and carrying out the characterization.

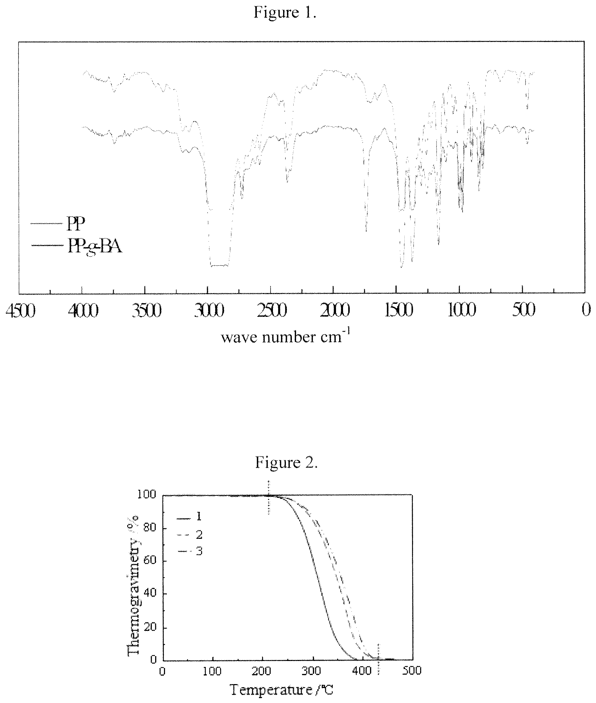

The infrared spectra are shown in figure 1, in which: 1 is a raw polypropylene; 2 is a graft product. The ester function characteristic absorption peak of grafting butyl acrylate at 1735 cm⁻¹ illustrates that butyl acrylate has been grafted onto the backbone of polypropylene.

Thermogravimetric analysis curve is shown in figure 2, in which: 1 is a raw polypropylene; 2 is a graft product with a grafting rate of 1.56%; 3 is a graft product with a grafting rate of 3.72%. From the curves it can be seen that the thermogravimetry of polypropylene varies before and after grafting, the graft product has higher decomposition temperature than that of raw polypropylene, and increased thermal stability is obtained.

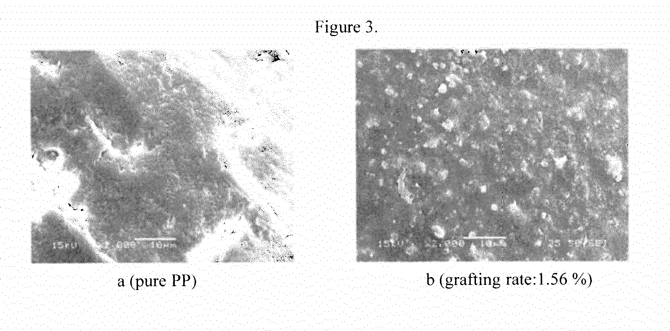

From electron microscopy it can be observed that the surface morphologies of raw material and graft product have changed. From Figure 3 (a,b) it can be seen that the surface morphology of raw polypropylene is substantially different from that of graft product, which demonstrates the butyl acrylate monomer has been grafted onto the polypropylene. From figure b it can be seen that the surface morphology of grafted polypropylene particles is relatively uniform, which verifies that the grafted acrylic acid monomer is evenly distributed onto the polypropylene matrix.

**Table 1. The water contact angles of graft products PP-g-BA with different grafting rates and the water contact angles of raw polypropylene**

| grafting rate (%) | 0 (raw PP) | 1.56 | 3.72 |
|---|---|---|---|
| contact angle (°) | 98 | 87 | 81 |

Example 2:

100.0 g of polypropylene with mixed particle size is weighed and incorporated with 1.0 % of AIBN as initiator, in which BA is 10%, and CO₂ is injected at temperature of 41 °C, the swelling pressure is 8.6 MPa and swelling is performed for 4 h; the grafting reaction time is 2 h, and reaction temperature is 78 °C; the obtained product is then purified and dried, and the calculated grafting rate is 4.56%. The measured MFR of product is 2.9 g·10min⁻¹, the tensile strength is 34.2 MPa, and breaking elongation rate is 680%.

### Example 3

100.0 g of polypropylene with mixed particle size is weighed and incorporated with 0.3 % of AIBN as initiator, in which AA is 5%, injecting CO₂ at pressure of 8.1 MPa, and swelling is performed for 4 h at temperature of 35 °C; the grafting reaction time is 2.5 h, and reaction temperature is 80 °C; the obtained product is then purified and dried, and the calculated grafting rate is 2.04%.

### Example 4

100.0 g of polypropylene with mixed particle size is weighed and incorporated with 0.2 % of DCP as initiator, in which St is 3%, injecting CO₂ at pressure of 7.6 MPa, and swelling is performed for 3 h at temperature of 38 °C; the grafting reaction time is 1.5 h, and reaction temperature is 105 °C; the obtained product is then purified and dried, and the calculated grafting rate is 1.32%.

### Example 5:

100.0 g of polypropylene with mixed particle size is weighed and incorporated with 0.8 % of BPO as initiator, in which BMA is 10%, injecting CO₂ at pressure of 8.3 MPa, and swelling is performed for 5 h at temperature of 42 °C; the grafting reaction time is 2 h, and reaction temperature is 95 °C; the obtained product is then purified and dried, and the calculated grafting rate is 5.34 %.

### Example 6:

100.0 g of polypropylene with mixed particle size is weighed and incorporated with 0.6 % of BPO as initiator, in which MMA is 8%, injecting CO₂ at pressure of 9.5 MPa, and swelling is performed for 4 h at temperature of 46 °C; the grafting reaction time is 3 h, and reaction temperature is 100 °C; the obtained product is then purified and dried, and the calculated grafting rate is 5.17 %.

### Example 7:

100.0 g of polypropylene with mixed particle size is weighed and incorporated with 0.3 % of AIBN as initiator, in which the total feeding amount of all monomers is 7% and the monomers mass ratio is 4:3 (BA:MAA), injecting CO₂ at pressure of 8.5 MPa, and swelling is performed for 2 h at temperature of 40 °C; the grafting reaction time is 3 h, and reaction temperature is 85 °C; the obtained product is then purified and dried, and the calculated grafting rate is 5.02 %.

### Example 8:

100.0 g of polypropylene with mixed particle size is weighed and incorporated with 0.2 % of AIBN as initiator, in which the total feeding amount of all monomers is 5% and the monomers mass ratio is 2:3 (MAH:MAA), injecting CO₂ at pressure of 8.2 MPa, and swelling is performed for 6 h at temperature of 38 °C; the grafting reaction time is 3 h, and reaction temperature is 85 °C; the obtained product is then purified and dried, and the calculated grafting rate is 3.31 %.

### Example 9:

100.0 g of polypropylene with mixed particle size is weighed and incorporated with 0.4 % of AIBN as initiator, in which the total feeding amount of all monomers is 9% and the monomers mass ratio is 4:5 (EA:MAA), injecting CO₂ at pressure of 8.8 MPa, and swelling is performed for 5 h at temperature of 39°C; the grafting reaction time is 2 h, and reaction temperature is 90 °C; the obtained product is then purified and dried, and the calculated grafting rate is 4.42 %.

### Example 10:

100.0 g of polypropylene with mixed particle size is weighed and incorporated with 0.3 % of AIBN as initiator, in which the total feeding amount of all monomers is 6% and the monomers mass ratio is 4:1:1 (BA:MAH:St), injecting CO₂ at temperature of 41°C, and swelling is performed for 6 h at swelling pressure of 8.1 MPa; the grafting reaction time is 2 h, and reaction temperature is 80 °C; the obtained product is then purified and dried, the calculated grafting rate is 5.40 %, the grafting efficiency is up to 90%, and the measured wetting angle is 72°.

From examples 1-10 it can be seen that the water contact angle of modified polypropylene is reduced from 98°(raw material) to 72°, supercritical assisted solid-phase grafting modification for polypropylene can effectively increase the polarity of PP and substantially enhance the hydrophilic property. The method for preparation polar polypropylene using supercritical CO₂-assisted solid-phase grafting modifying polypropylene can achieve very good result.

### Industrial applicability

Under above conditions, the thermal property, polarity and the like of obtained graft product substantially get improved, and the original good mechanical property of polypropylene is reserved. The thermal decomposition temperature is significantly increased by about 50°C compared to un-grafted polypropylene; it is observed by the test of wetting angle that the wetting angle of graft product is reduced from 98°C to 72°C, and the hydrophilic property and polarity substantially are obviously improved; the mechanical property and fluid flow rate of graft product are close to those of un-grafted polypropylene. Accordingly, during the grafting process of the present invention, the degradation is reduced, and grafting and grafting efficiency are high. The present invention has broad prospect for industrial production.

## Claims

1. A supercritical carbon dioxide-assisted solid-phase grafting modification method for polypropylene, comprising:
swelling polypropylene in supercritical carbon dioxide with dissolved vinyl monomer and an initiator for 0.5 to 10 hours, then slowly relieving the pressure; moving the polypropylene that has undergone the swelling process into a reaction kettle, and adding xylene as an interface agent with the mass ratio of xylene to the polypropylene being 1%, increasing the temperature up to between 65°C and 165°C under normal pressure, and reacting for 1 to 10 hours to obtain objective product;
the swelling permeation temperature during the swelling process being from 31°C to 60°C, and the swelling pressure being from 7.5 to 12 MPa;
the initiator being azo compound or peroxide, which accounts for 0.1-5.0% by mass of the polypropylene;
said vinyl monomer accounting for 0.2-20% by mass of the polypropylene.

2. The supercritical carbon dioxide-assisted solid-phase grafting modification method for polypropylene according to claim 1, wherein said polypropylene is isotatic homopolymer polypropylene.

3. The supercritical carbon dioxide-assisted solid-phase grafting modification method for polypropylene according to claim 1, wherein said initiator is selected from the group consisting of azobisisobutyronitrile, cumyl peroxide and benzoyl peroxide.

4. The supercritical carbon dioxide-assisted solid-phase grafting modification method for polypropylene according to claim 1, wherein said vinyl monomer is selected from one or more of acrylic acid, butyl acrylate, maleic anhydride, butyl methacrylate, methylacrylic acid, styrene, methyl methacrylate, ethyl acrylate, and pentaerythritol triacrylate.

## Patentansprüche

1. Verfahren zur Modifizierung von Polypropylen durch überkritische Kohlendioxid-unterstützte Festphasenpfropfung, umfassend:
Quellen von Polypropylen in überkritischem Kohlendioxid mit gelöstem Vinylmonomer und einem Initiator für 0,5 bis 10 Stunden, dann langsames Entlasten des Drucks; Bewegen des Polypropylens, das den Quellprozeß durchlaufen hat, in einen Reaktionskessel, und Zugeben von Xylol als Grenzflächenmittel, wobei das Massenverhältnis von Xylol zu dem Polypropylen 1 % beträgt, Erhöhen der Temperatur bis zu zwischen 65°C und 165°C unter Normaldruck, und reagieren lassen für 1 bis 10 Stunden, um das Zielprodukt zu erhalten;
wobei die Quellpermeationstemperatur während des Quellvorgangs von 31°C bis 60°C und der Quelldruck von 7,5 bis 12 MPa beträgt;
wobei der Initiator eine Azoverbindung oder ein Peroxid ist, der 0,1-5,0 Massenprozent des Polypropylens ausmacht;
wobei das genannte Vinylmonomer 0,2-20 Massenprozent des Polypropylens ausmacht.

2. Das Verfahren zur Modifizierung von Polypropylen durch überkritische Kohlendioxid-unterstützte Festphasenpfropfung nach Anspruch 1, wobei das Polypropylen isotatisches homopolymeres Polypropylen ist.

3. Das Verfahren zur Modifizierung von Polypropylen durch überkritische Kohlendioxid-unterstützte Festphasenpfropfung nach Anspruch 1, wobei der Initiator aus der Gruppe ausgewählt ist, die aus Azobisisobutyronitril, Cumylperoxid und Benzoylperoxid besteht.

4. Das Verfahren zur Modifizierung von Polypropylen durch überkritische Kohlendioxid-unterstützte Festphasenpfropfung nach Anspruch 1, wobei das Vinylmonomer aus einem oder mehreren von Acrylsäure, Butylacrylat, Maleinsäureanhydrid, Butylmethacrylat, Methylacrylsäure, Styrol, Methylmethacrylat, Ethylacrylat und Pentaerythritoltriacrylat ausgewählt ist.

## Revendications

1. Procédé de modification par greffage en phase solide assisté par du dioxyde de carbone supercritique destiné au polypropylène, comprenant :
le gonflement du polypropylène dans du dioxyde de carbone supercritique avec un monomère de vinyle dissous et un initiateur pendant 0,5 à 10 heures, puis la libération lente de la pression ; le déplacement du polypropylène qui a subi le procédé de gonflement dans une cuve de réaction, et l'ajout de xylène comme agent d'interface, le rapport massique du xylène au polypropylène étant de 1 %, l'augmentation de la température jusque entre 65 °C et 165 °C sous une pression normale, et la réaction pendant 1 à 10 heures pour obtenir un produit cible ;
la température de perméation de gonflement pendant le processus de gonflement allant de 31 °C à 60 °C, et la pression de gonflement allant de 7,5 à 12 MPa ;
l'initiateur étant un composé azo ou un peroxyde, qui représente de 0,1 à 5,0 % en masse du polypropylène ;
ledit monomère vinyle représentant de 0,2 à 20 % en masse du polypropylène.

2. Procédé de modification par greffage en phase solide assisté par du dioxyde de carbone supercritique destiné au polypropylène selon la revendication 1, dans lequel ledit polypropylène est un polypropylène homopolymère isotactique.

3. Procédé de modification par greffage en phase solide assisté par du dioxyde de carbone supercritique destiné au polypropylène selon la revendication 1, dans lequel ledit initiateur est choisi dans le groupe constitué par l'azobisisobutyronitrile, le peroxyde de cumyle et le peroxyde de benzoyle.

4. Procédé de modification par greffage en phase solide assisté par du dioxyde de carbone supercritique destiné au polypropylène selon la revendication 1, dans lequel ledit monomère de vinyle est choisi parmi un ou plusieurs composés parmi l'acide acrylique, l'acrylate de butyle, l'anhydride maléique, le méthacrylate de butyle, l'acide méthylacrylique, le styrène, le méthacrylate de méthyle, l'acrylate d'éthyle et le triacrylate de pentaérythritol.
